# EUROPÄISCHE PATENTSCHRIFT

(11) **EP 1 972 480 B1**
(45) Veröffentlichungstag und Bekanntmachung des Hinweises auf die Patenterteilung: **04.12.2013**
(21) Anmeldenummer: 08003914.2
(22) Anmeldetag: 29.02.2008
(51) Int. Cl.: B60J 7/12, F15B 11/048, B60J 7/057

(54) **Hydraulikanlage zum Öffnen und Schließen eines Cabrioverdecks**
Hydraulic device for opening and closing a convertible roof
Installation hydraulique destinée à l'ouverture et la fermeture d'une capote de cabriolet

(30) Priorität: 19.03.2007 DE 102007013015
(43) Veröffentlichungstag der Anmeldung: 24.09.2008
(73) Patentinhaber: Rausch und Pausch GmbH, 95100 Selb (DE)
(72) Erfinder: Behnke, Andreas, 21149 Hamburg (DE); Haltermann, Frank, 21258 Heidenau (DE); Wagner, Tobias, 21149 Hamburg (DE)
(74) Vertreter: Klunker . Schmitt-Nilson . Hirsch

(56) Entgegenhaltungen:
- EP-A1- 1 046 533
- EP-A2- 1 106 840
- WO-A2-2004/036057

## Beschreibung

Die Erfindung betrifft eine Hydraulikanlage zum Öffnen und Schließen eines Cabrioverdecks, welches mehrere unabhängig voneinander bewegbare Bauteile umfasst, einschließlich eines Dachs sowie eines Stauraumdeckels, unter dem das Dach im geöffneten Zustand verstaut wird.

Zur Bewegung derartiger Dachsysteme müssen die Hydraulikanlagen in der Lage sein, die einzelnen Bauteile in einer definierten Reihenfolge so zu bewegen, dass das Dach kollisionsfrei abgelegt wird. Im Falle eines Hardtops wird das Dach in der Regel unter dem Heckdeckel verstaut. Im Falle eines Stoffverdecks wird das Dach unter einem Verdeckkastendeckel verstaut. In diesem Falle ist zusätzlich ein Spannbügel vorhanden, um das Stoffverdeck im geschlossenen Zustand zu spannen, so dass hier - wie auch im Falle mehrteiliger Hardtops - in der Regel die Bewegung von zumindest drei beweglichen Bauteilen zu koordinieren ist.

Die Bewegung der einzelnen Bauteile geschieht mittels Aktuatoren, wobei in der Regel auf jeder Seite des Fahrzeugs ein Aktuator für jedes Bauteil vorhanden ist. Die Aktuatoren werden mittels elektrisch betätigbarer Zweipositionenventile gesteuert, wobei herkömmlich jeweils zwei Ventile pro Aktuatorpaar vorhanden sind. Diese Ventile sind jedoch kostspielig, so dass ein grundsätzliches Anliegen darin besteht, die Anzahl der Ventile gering zu halten.

In EP 1 046 533 A1 werden verschiedene Maßnahmen beschrieben, um die Anzahl der Ventile zu reduzieren. Einerseits wird dort beschrieben, dass jedenfalls für solche Aktuatoren, die beim Ausschieben der Kolbenstange nur geringe Kräfte liefern müssen, statt zweier Ventile lediglich ein Ventil eingesetzt zu werden braucht, wenn der Aktuator "regenerativ" betrieben wird. Regenerativ betreiben lassen sich Differentialkolbenaktuatoren, indem beide Kolbenflächen an dieselbe Pumpleitung angeschlossen sind und die größere der beiden Kolbenflächen über ein Schaltventil wahlweise mit dem Tank verbunden werden kann. Bei geöffnetem Tankanschluß fährt der Kolben ein. Bei geschlossenem Tankanschluß dagegen fährt der Kolben aus, weil aufgrund der unterschiedlich großen Kolbenflächen auf die größere Kolbenfläche eine größere Kraft wirkt als auf die gegenüberliegende kleinere Kolbenfläche. Regenerativ betriebene Aktuatoren eignen sich zur Betätigung des Stauraumdeckels und auch zur Betätigung des Spannbügels, sind aber wegen der erforderlichen hohen Kräfte beim Schließen des Verdecks weniger geeignet zur Betätigung des Dachs.

Die EP 1 046 533 A1 befasst sich insbesondere mit dem Problem, eine automatische "Notbedienungsfunktion" unter Aufrechterhaltung einer "Haltefunktion" bei gleichzeitiger weiterer Reduzierung der notwendigen Ventile vorzuschlagen. Die Haltefunktion soll sicherstellen, den Bewegungsablauf der Verdeckeinheit zu jedem beliebigen Moment zeitweilig einzustellen und in der momentanen Stellung zu halten. Die Notbedienungsfunktion soll die Möglichkeit eröffnen, die Verdeckeinheit manuell im geöffneten und im geschlossenen Zustand zu bewegen, wenn aufgrund einer elektrischen Störung die elektrisch angetriebene Pumpe und/oder elektrisch betätigten Ventile nicht funktionieren. Dies wird in der EP 1 046 533 A1 durch eine Kombination mehrerer Rückschlagventile vor einzelnen oder allen Schaltventilen in Kombination mit einem ODER-Ventil realisiert. Die Rückschlagventile dienen der Haltefunktion und das ODER-Ventil der Notbedienungsfunktion. Das ODER-Ventil ist bei den regenerativ betriebenen Aktuatoren an diejenige Seite des Differentialkolbens angeschlossen, an der kein Schaltventil vorgesehen ist. An der gegenüberliegenden Seite des Differentialkolbens, also der Seite mit Schaltventil, wird der Kolben dadurch drucklos geschaltet, dass das betreffende Schaltventil in nicht aktivierter Stellung zum Tank führt. Um die Drucklosschaltung der schaltventilfreien Seite des Differentialkolbens zu erreichen, wird diese Seite über das ODER-Ventil entweder mit dem einen oder mit dem anderen Schaltventil des zur Dachbewegung dienenden Aktuators geführt. Denn dieser Aktuator besitzt wegen der hohen erforderlichen Kräfte zum Schließen des Dachs für jede Seite des Kolbens ein eigenes. Schaltventil, die aber bei Stromausfall beide zum Tank führen, so dass das ODER-Ventil bei Stromausfall in jedem Falle eine Verbindung zum Tank herstellt.

Um die Bewegung der einzelnen Verdeckkomponenten harmonischer zu gestalten und insbesondere um ein ungebremstes Einfahren der Aktuatoren und Verdeckbauteile in ihre Endlagen zu vermeiden, werden Proportionalventile eingesetzt. Solche Proportionalventile sind für jeden geregelten Kreis notwendig. Ein Proportionalventil, wie es auch im Zusammenhang mit der vorliegenden Erfindung verwendbar ist, ist beispielsweise in der WO 2004/036057 A2 beschrieben. Mittels eines solchen Mehrpositionenventils mit 3 Anschlüssen und beliebig fein einstellbaren Schaltpositionen lässt sich einerseits eine Verbindung zwischen einem Pumpenanschluß und einem Aktuator bei geschlossenem Tankanschluß herstellen, und andererseits eine Verbindung zwischen dem Aktuator und dem Tankanschluß bei geschlossenem Pumpenanschluß, wobei in diesem Falle jedoch durch geeignete elektromagnetische Ansteuerung eine Proportionalcharakteristik derart erzielbar ist, dass trotz geschlossenen Pumpenanschlusses ein Drosselquerschnitt zwischen dem Aktuatoranschluß und dem Tankanschluß abhängig von einer Steuerung des Magnetspulenstroms variabel einstellbar ist. Jedoch sind Proportionalventile teurer als Schaltventile.

Aufgabe der vorliegenden Erfindung ist es daher, eine Hydraulikanlage zum Öffnen und Schließen eines Cabrioverdecks mit mehreren unabhängig voneinander bewegbaren Bauteilen vorzuschlagen, welches die Regelung der Geschwindigkeit der einzelnen Bauteile zulässt und mit wenig Proportionalventilen auskommt.

Diese Aufgabe wird durch eine Hydraulikanlage mit den Merkmalen des Anspruchs 1 gelöst. In davon abhängigen Ansprüchen sind vorteilhafte Ausgestaltungen und Weiterbildungen der Erfindung angegeben.

Durch eine spezielle Verschaltung mehrerer Hydraulikleitungen unter besonderer Berücksichtigung ihrer Funktion für den jeweils betroffenen Aktuator und durch die konkrete Auswahl desjenigen Schaltventils, welches durch ein Proportionalventil ersetzt wird, wird eine Hydraulikanlage mit mehreren Hydraulikkreisen geschaffen, die mit möglichst wenigen Proportionalventilen auskommen kann.

Dazu umfasst eine erfindungsgemäße Hydraulikanlage zum Öffnen und Schließen eines Cabrioverdecks:
- einen ersten Hydraulikkreis zur Bewegung eines Dachs des Cabrioverdecks, mit mindestens einem Aktuator, der einen ersten Hydraulikanschluß und einen zweiten Hydraulikanschluß umfasst und vorgesehen ist, das Dach zu schließen, wenn Hydraulikfluid durch den ersten Hydraulikanschluß aus dem Aktuator strömt,
- einen zweiten Hydraulikkreis zur Bewegung des Stauraumdeckels, mit mindestens einem Aktuator, der einen ersten Hydraulikanschluß und einen zweiten Hydraulikanschluß umfasst und vorgesehen ist, den Stauraumdeckel zu schließen, wenn Hydraulikfluid durch den zweiten Hydraulikanschluß aus dem Aktuator strömt,
- ein erstes Ventil, welches über eine erste Hydraulikleitung mit dem ersten Hydraulikanschluß des ersten Hydraulikkreises verbunden ist und eingerichtet ist, diesen je nach seiner Schaltstellung mit einer Hydraulikfluidzuleitung oder einer Hydraulikfluidableitung zu verbinden,
- ein zweites Ventil, welches über eine zweite Hydraulikleitung mit dem zweiten Hydraulikanschluß des ersten Hydraulikschaltkreises verbunden ist und eingerichtet ist, diesen je nach seiner Schaltstellung mit einer Hydraulikfluidzuleitung oder einer Hydraulikfluidableitung zu verbinden, und
- ein ODER-Ventil, welches angeordnet und eingerichtet ist, je nach seiner Schaltstellung eine dritte Hydraulikleitung, die zu einem Hydraulikanschluß des Aktuators des zweiten Hydraulikkreises führt, entweder mit der ersten Hydraulikleitung oder mit der zweiten Hydraulikleitung zu verbinden,
wobei das erste Ventil ein Proportionalventil ist und dass die dritte Hydraulikleitung zum zweiten Hydraulikanschluß des Aktuators des zweiten Hydraulikkreises führt.

Aufgrund der erfindungsgemäßen Ausbildung der Hydraulikanlage wird erreicht, dass sowohl das Dach als auch der Stauraumdeckel in ihre jeweils geschlossene Position gebremst eingefahren werden können, indem der Rückfluss des Hydraulikfluids aus den Aktuatoren über das ODER-Ventil zurück zum Tank jeweils über das Proportionalventil individuell drosselbar ist. Dies ist von besonderer Bedeutung, um die Verriegelungsmechanismen zu schonen, mittels denen das Dach bzw. der Stauraumdeckel in ihrer jeweiligen geschlossenen Position verriegelt werden. In die übrigen Endlagen, also beispielsweise die offene Position des Dachs sowie die offene Position des Stauraumdeckels, ist ein ungebremstes Einfahren unkritisch, da hier keine Verriegelungsmechanik zu schonen ist. Statt dessen fahren die Bauteile hier beispielsweise gegen Gummipufferungen oder im Falle eines Stoffverdecks ergibt sich eine ausreichende Dämpfung bereits durch das selbständige Zusammenfalten des Verdeckstoffs.

Selbstverständlich können zusätzliche Proportionalventile eingesetzt werden, soweit dies aus anderen Gründen erwünscht ist. Bevorzugt wird erfindungsgemäß aber eine Variante, bei der die übrigen Ventile alle oder zumindest so weit wie möglich als einfache elektrisch betätigbare Zweipositionenventile realisiert sind, also solche Ventile, die nur Schaltendstellungen einnehmen.

Darüber hinaus ist die erfindungsgemäße Hydraulikanlage nicht darauf beschränkt, dass einzelne Aktuatoren regenerativ betrieben werden. Vielmehr bietet die erfindungsgemäße Verschaltung der Hydraulikleitungen denselben Vorteil einer verringerten Anzahl an Proportionalventilen, auch wenn einzelne oder alle Aktuatoren über zwei Schaltventile gesteuert werden.

Das ODER-Ventil der erfindungsgemäßen Hydraulikanlage kann ein elektrisch betätigbares 3/2-Schaltventil sein, so dass aktiv vorgegeben werden kann, welche von zwei möglichen Verbindungen das ODER-Ventil herstellt, um beim Schließen des Dachs bzw. des Stauraumdeckels einen Rückfluss des Hydraulikfluids zurück zum Tank jeweils über das Proportionalventil zu führen.

Vorzugsweise handelt es sich bei dem ODER-Ventil aber um ein passives Bauelement, welches preiswerter ist als ein 3/2-Schaltventil und keine elektronische Ansteuerung erfordert. Die Stellung eines passiven ODER-Ventils wird vielmehr durch den Differenzdruck zweier Hydraulikleitungen bestimmt, zu denen das ODER-Ventil eine Verbindung herstellen soll, wobei die Verbindung immer zu der Hydraulikleitung mit höherem Druck hergestellt wird. Dabei besitzt das ODER-Ventil eine Vorzugsstellung, die funktionsbedingt so ausgebildet ist, dass das ODER-Ventil in seiner Vorzugsstellung eine Verbindung zum Proportionalventil herstellt. Beispielsweise kann das ODER-Ventil durch Federvorspannung in seiner Vorzugsstellung gehalten werden.

Unabhängig davon, ob das ODER-Ventil als elektrisch betätigtes Schaltventil oder als passives Bauelement mit der beschriebenen Vorzugsstellung ausgeführt ist, bietet die erfindungsgemäße Verschaltung der Hydraulikleitungen über das ODER-Ventil den Vorteil, dass der Rückfluß des Hydraulikfluids aus den Aktuatoren unterschiedlicher Hydraulikkreise zurück in den Tank immer über das eine Proportionalventil erfolgt, wenn die Aktuatoren in ihre verriegelbare Endposition fahren.

Nachfolgend wird die Erfindung beispielhaft anhand der begleitenden Zeichnungen beschrieben. Darin zeigen:
- Figur 1A: ein Hydraulikschema zu einer Hydraulikanlage gemäß einem ersten Ausführungsbeispiel der Erfindung für ein Hardtop-Cabrioverdeck,
- Figur 1B: einen Ablaufplan für die Hydraulikanlage gemäß dem ersten Ausführungsbeispiel nach Figur 1A,
- Figur 2A: ein Hydraulikschema zu einer Hydraulikanlage gemäß einem zweiten Ausführungsbeispiel der Erfindung für ein Hardtop-Cabrioverdeck,
- Figur 2B: einen Ablaufplan für die Hydraulikanlage gemäß dem zweiten Ausführungsbeispiel nach Figur 2A,
- Figur 3A: schematisch die einzelnen Schritte der Dachablage gemäß dem ersten und zweiten Ausführungsbeispiel,
- Figur 3B: schematisch die einzelnen Schritte des Schließens des Dachs gemäß dem ersten und zweiten Ausführungsbeispiel,
- Figur 4A: ein Hydraulikschema zu einer Hydraulikanlage gemäß einem dritten Ausführungsbeispiel der Erfindung für ein Stoffverdeck,
- Figur 4B: einen Ablaufplan für die Hydraulikanlage gemäß dem dritten Ausführungsbeispiel nach Figur 4A,
- Figur 5A: ein Hydraulikschema zu einer Hydraulikanlage gemäß einem vierten Ausführungsbeispiel der Erfindung für ein Stoffverdeck,
- Figur 5B: einen Ablaufplan für die Hydraulikanlage gemäß dem vierten Ausführungsbeispiel nach Figur 5A,
- Figur 6A: schematisch die einzelnen Schritte der Dachablage gemäß dem dritten und vierten Ausführungsbeispiel,
- Figur 6B: schematisch die einzelnen Schritte des Schließens des Dachs gemäß dem dritten und vierten Ausführungsbeispiel,
- Figur 7A: ein ODER-Ventil gemäß einer ersten Variante und
- Figur 7B: ein ODER-Ventil gemäß einer zweiten Variante.

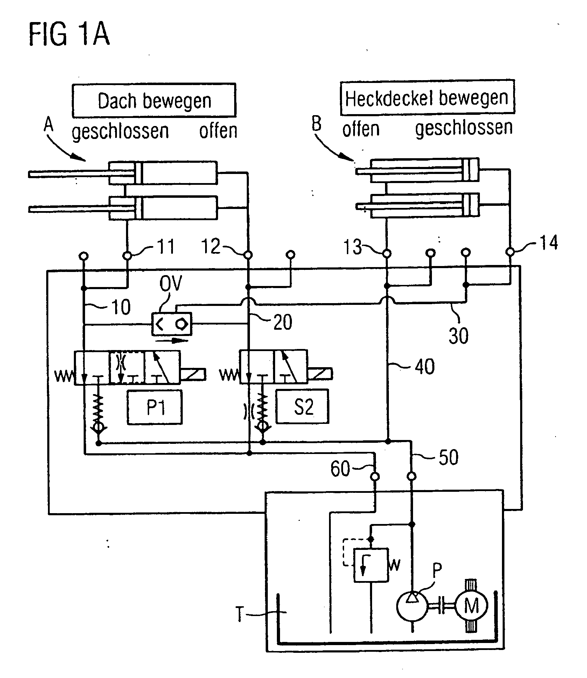

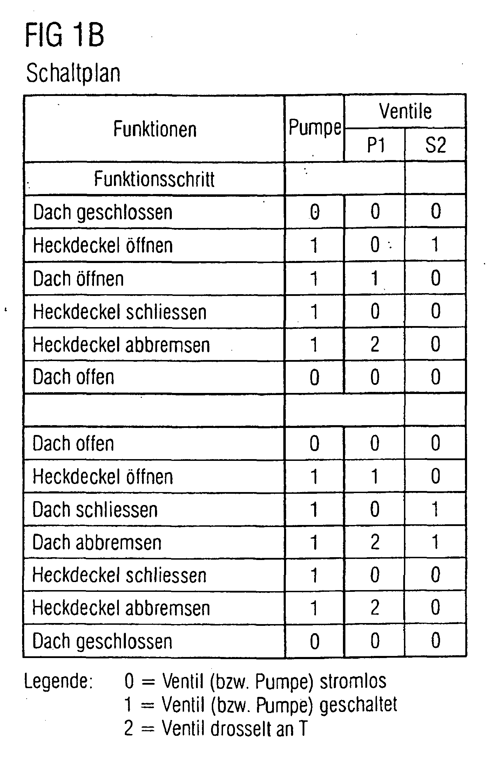

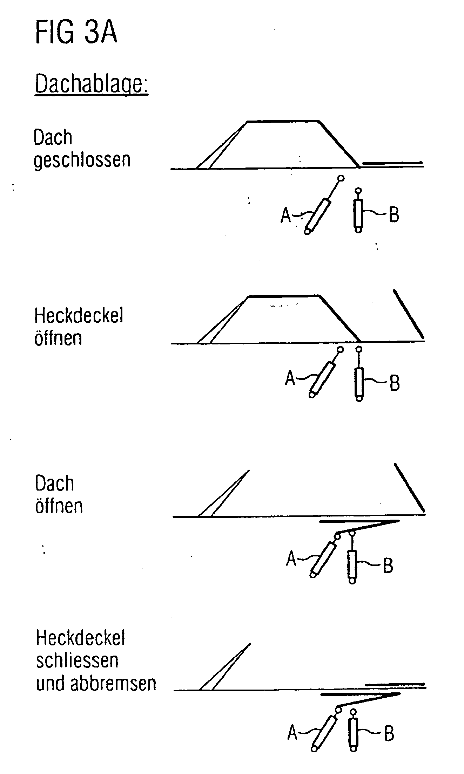

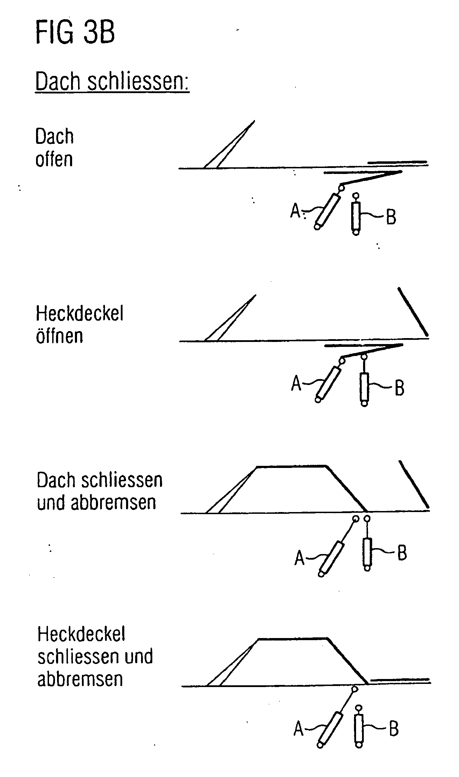

Figur 1A zeigt ein Hydraulikschema gemäß einem ersten Ausführungsbeispiel mit dem ein Dach und ein Heckdeckel unabhängig voneinander zwischen einer geschlossenen und einer offenen Position verlagerbar sind. Figur 1B zeigt dazu einen Ablaufplan, aus dem sich ergibt, in welcher Reihenfolge die Ventile P1 und S2 der Hydraulikanlage zu schalten sind, um einerseits das geschlossene Dach zu öffnen und unter dem Heckdeckel zu verstauen und andererseits das Dach unter dem Heckdeckel hervor in die Schließstellung zu bewegen. In den Figuren 3A und 3B sind diese Bewegungsabläufe schematisch illustriert. Demzufolge ist die Hydraulikanlage besonders dazu geeignet, ein Hardtop-Cabrioverdeck beim Öffnen und Schließen derart mit der Bewegung eines Heckdeckels zu koordinieren, dass das Dach beim Einund Ausfahren nicht mit dem Heckdeckel kollidiert.

Die Hydraulikanlage umfasst in üblicher Weise eine motorisch angetriebene Pumpe P und einen Tank T bzw. Ölsumpf, aus dem die Pumpe das Hydraulikfluid ansaugt und in den das Hydraulikfluid aus dem System zurückfließt.

Die Hydraulikanlage umfasst darüber hinaus im dargestellten ersten Ausführungsbeispiel zwei Hydraulikkreise, nämlich einen ersten Hydraulikkreis mit zwei Aktuatoren A zum Bewegen des Dachs und einen zweiten Hydraulikkreis mit zwei Aktuatoren B zum Bewegen des Heckdeckels. Die beiden Aktuatoren A und die beiden Aktuatoren B sind jeweils parallel geschaltet. Es können auch mehr als zwei parallel geschaltete Aktuatoren je Hydraulikkreis vorgesehen sein oder beispielsweise auch nur ein einziger Aktuator. Nachfolgend werden die Aktuatoren daher auch in der Einzahl beschrieben.

Die Aktuatoren A bzw. B sind hier der Einfachheit halber als einfache Linearkolbenaktuatoren dargestellt, die als Differentialkolben ausgebildet sind. Andere hydraulische Aktuatoren können in gleicher Weise eingesetzt werden. Entscheidend ist im Zusammenhang mit der vorliegenden Erfindung allein, dass die Aktuatoren jeweils einen ersten und einen zweiten Hydraulikanschluß umfassen, um den Aktuator bzw. dessen Kolben in entgegengesetzte Richtungen zu bewegen.

Der erste Hydraulikkreis zum Bewegen des Dachs umfasst ein Proportionalventil P1 und ein 3/2 Schaltventil S2. Das Proportionalventil P1 ist über eine erste Hydraulikleitung 10 mit einem ersten Hydraulikanschluß 11 des Aktuators A verbunden und das Schaltventil S2 ist über eine zweite Hydraulikleitung 20 mit einem zweiten Hydraulikanschluß 12 desselben Aktuators A verbunden. Es handelt sich bei beiden Ventilen P1 und S2 um elektrisch betätigte, federrückgestellte Ventile, über die die Hydraulikanschlüsse 11 und 12 unabhängig voneinander wahlweise mit dem Pumpenanschluß oder mit dem Tankanschluß verbunden werden können. Im Falle des 3/2-Schaltventils S2 ist der Rücklauf zum Tank durch eine fest vorgegebene Drossel gedrosselt. Das Proportionalventil P1 dagegen ist als Mehrpositionenventil derart ausgebildet, dass die Drosselung zum Tank variabel über einen Magnetspulenstrom einstellbar ist. Ein derartiges Ventil ist beispielsweise in der WO 2004/036057 A2 beschrieben. Es besitzt 3 Anschlüsse mit einer ersten Position, bei der eine Verbindung zur Pumpe bei gesperrtem Tankrücklauf besteht, einer zweiten Position, bei der die Verbindung zur Pumpe gesperrt und der Tankrücklauf maximal offen ist, sowie beliebig vielen weiteren Positionen, bei denen eine Verbindung zur Pumpe ebenfalls gesperrt und der Tankrücklauf individuell gedrosselt ist. Damit ist beim Schließen des Dachs, also bei geschaltetem bzw. aktiviertem Schaltventil S2, der Rücklauf des Hydraulikfluids aus dem Aktuator A durch den ersten Hydraulikanschluss 11 und weiter durch das Proportionalventil P1 zurück zum Tank mittels der variabel einstellbaren Drosselung des Proportionalventils P1 exakt beeinflussbar. Das Einfahren des Aktuators in die Verriegelungsposition des geschlossenen Dachs lässt sich dadurch gezielt verlangsamen und die Verriegelungsmechanik in den Dachanschlägen entsprechend schonen.

Der zweite Hydraulikkreis zum Bewegen des Heckdeckels mittels der Aktuatoren B besitzt in diesem Ausführungsbeispiel keine eigenen Schaltventile. Statt dessen werden durch den Einsatz eines ODER-Ventils OV mit Vorzugsstellung die beiden Ventile P1 und S2 auch für den zweiten Hydraulikkreis genutzt. Das ODER-Ventil verbindet die beiden Hydraulikleitungen 10 und 20 des ersten Hydraulikkreises miteinander derart, dass eine dritte Hydraulikleitung 30, die zu einem zweiten Hydraulikanschluß 14 des Aktuators B führt, entweder über die erste Hydraulikleitung 10 mit dem Proportionalventil P1 oder über die zweite Hydraulikleitung 20 mit dem Schaltventil S2 verbunden ist. Das Ausfahren des Aktuators B bzw. Öffnen des Heckdeckels erfolgt dann durch Schalten eines der Ventile P1 oder S2. Eine vierte Hydraulikleitung 40 führt von einem ersten Hydraulikanschluß 13 des Aktuators B zur Pumpleitung 50. Das heißt, der Aktuator B wird bei diesem ersten Ausführungsbeispiel regenerativ betätigt.

Nachfolgend wird die Funktionsweise des Öffnens und Schließens des Dachs einschließlich des Öffnens und Schließens des Heckdeckels ausgehend von der Situation des geschlossenen Dachs beschrieben. Die einzelnen Funktionsschritte sind im Ablaufplan gemäß Figur 1B wiedergegeben. Demnach sind im geschlossenen (wie auch im offenen) Zustand des Dachs alle Komponenten stromlos bzw. inaktiv. Weder arbeitet die Pumpe P, noch sind die Ventile P1 und S2 geschaltet. Als erstes wird der Heckdeckel geöffnet (vergleiche auch die schematische Darstellung der einzelnen Schritte bei der Dachablage, wie in Figur 3A dargestellt). Dazu wird das Ventil S2 geschaltet, so dass das ODER-Ventil eine Strömungsverbindung von der Pumpleitung 50 zur dritten Hydraulikleitung 30 und weiter zum zweiten Hydraulikanschluß 14 des Aktuators B des zweiten Hydraulikkreises freigibt. Dadurch wird der Differentialkolben des Aktuators B ausgefahren, wodurch der Heckdeckel vom geschlossenen in den offenen Zustand überführt wird. Das durch den ersten Hydraulikanschluß 13 des Aktuators B verdrängte Hydraulikfluid fließt nicht etwa zum Tank T zurück, sondern wird in die Pumpleitung P gespeist. Es handelt sich somit um einen regenerativ betriebenen Aktuator, der nur deshalb in der beschriebenen Weise funktioniert, weil aufgrund der Ausgestaltung des Kolbens als Differenzkolben die durch den ersten Hydraulikanschluß 13 verdrängte Hydraulikfluidmenge kleiner ist als die durch den zweiten Hydraulikanschluß 14 zugeführte Menge. Zu beachten ist, dass bei aktiv geschaltetem Schaltventil S2 nicht nur der Heckdeckel in seine offene Position bewegt wird, sondern gleichzeitig das Dach mittels des Aktuators A in seine bereits geschlossene Endlage gedrückt wird.

Nachdem der Heckdeckel geöffnet ist, wird als nächstes das Dach geöffnet. Das heißt, das Dach wird entriegelt und anschließend mittels des Aktuators A von seiner geschlossenen in seine offene Position bewegt, indem das Proportionalventil P1 aktiv geschaltet wird. Zu beachten ist, dass nun auch das ODER-Ventil schaltet und eine Verbindung zwischen dem zweiten Hydraulikanschluß 14 des Aktuators B und der Pumpleitung 50 über das Proportionalventil P1 herstellt. Um zu verhindern, dass der Heckdeckel in seiner offenen Position dabei einem Druckimpuls ausgesetzt wird ("Zucken des Deckels"), wird das Schaltventil S2 erst dann stromlos, also inaktiv geschaltet, wenn das Proportionalventil P1 aktiv geschaltet worden ist. Denn dadurch ist sichergestellt, dass der zweite Hydraulikanschluß 14 des Aktuators B bei geöffnetem Heckdeckel ständig mit der Pumpleitung 50 verbunden ist.

Beim Einfahren des Dachs in die offene Endlage wird das aus dem Aktuator A verdrängte Hydraulikfluid durch die zweite Hydraulikleitung 20 und das inaktiv geschaltete Schaltventil S2 zurück in die Tankleitung 60 geleitet. Eine feste Drossel auf der Tankseite des Schaltventils S2 sorgt für ein gedämpftes Einfahren. In der Endlage kann das Dach auf einer Gummipufferung aufliegen.

Nachdem das Dach im Stauraum abgelegt worden ist, wird der Heckdeckel wieder geschlossen. Dazu wird das Proportionalventil P1 zunächst vollkommen stromlos, also inaktiv geschaltet. Sobald sich aber der Heckdeckel seiner geschlossenen Verriegelungsposition nähert, wird der Heckdeckel abgebremst, indem das Proportionalventil P1 teilweise bestromt wird. Dadurch wird der Tankrückfluß gedrosselt. Mit zunehmender Stromstärke nimmt die Drosselung zu. In der Endlage des Heckdeckels wird das Proportionalventil P1 dann wieder vollkommen stromlos geschaltet, und der Heckdeckel kann verriegelt werden.

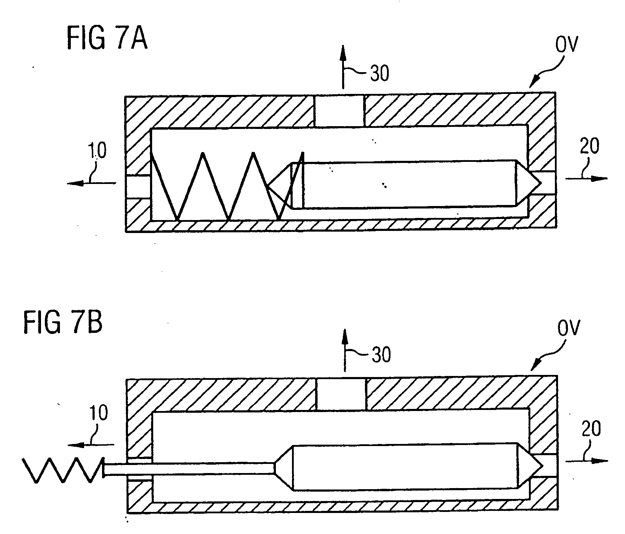

Wichtig für den Vorgang des Schließens des Heckdeckels ist der Umstand, dass sich das ODER-Ventil OV in einer Stellung befindet, in der es eine Strömungsverbindung zwischen dem zweiten Hydraulikanschluß 14 des Aktuators B und dem zum Tank T geöffneten Proportionalventil P1 herstellt. Im Falle des dargestellten passiven ODER-Ventils OV wird dies dadurch erreicht, dass das ODER-Ventil OV eine Vorzugsstellung besitzt, die gerade diese Strömungsverbindung sicherstellt, wenn, wie in der beschriebenen Situation, das andere Schaltventil S2 zum Tank geöffnet ist. Statt eines passiven ODER-Ventils kann selbstverständlich auch ein aktives, elektrisch schaltbares Ventil als ODER-Ventil eingesetzt werden. Ein passives ODER-Ventil ist aber aufgrund der einfachen Bauweise zu bevorzugen. Die Vorzugsstellung lässt sich beispielsweise mittels einer Federvorspannung realisieren. In den Figuren 7A und 7B sind zwei Ausführungsvarianten eines solchen passiven ODER-Ventils mit federvoreingestellter Vorzugsstellung schematisch dargestellt.

Das Öffnen des Dachs erfolgt in umgekehrter Weise. Zunächst wird wiederum der Heckdeckel geöffnet, diesmal jedoch durch Aktivschalten des Proportionalventils P1, da dadurch sichergestellt ist, dass das Dach während des Öffnens des Heckdeckels in seine offene Endlage gedrückt bzw. dort gehalten wird. Würde der Heckdeckel über das Schaltventil S2 geöffnet, so würde gleichzeitig das Dach aus seiner offenen Position in seine geschlossene Position angehoben und dabei mit dem Heckdeckel kollidieren.

Sobald der Heckdeckel seine offene Position erreicht hat, wird das Dach geöffnet, indem das Proportionalventil P1 stromlos, also inaktiv und wieder das Schaltventil S2 aktiv geschaltet wird. Wiederum ist es zweckmäßig, das Schaltventil S2 aktiv zu schalten, bevor das Proportionalventil P1 inaktiv geschaltet wird, um einen Hydraulikimpuls auf den Heckdeckel zu vermeiden. Beim Umschalten auf das Schaltventil S2 schaltet auch das ODER-Ventil, so dass der Heckdeckel beim Schließen des Dachs gleichzeitig in seine offene Position gedrückt bzw. dort gehalten wird. Zum Ende der Schließbewegung des Dachs wird das Proportionalventil P1 wiederum teilweise bestromt, um den Rückfluß in den Tank T zu drosseln und dadurch die Schließbewegung in seiner Endlage abzubremsen, wodurch ein ungebremstes Einfahren gegen die Verriegelungsmechanik vermieden werden kann.

Sobald das Dach verriegelt ist, wird das Proportionalventil P1 vollkommen stromlos geschaltet und auch das Schaltventil S2 wird stromlos geschaltet. In dieser Situation ist der Aktuator B des zweiten Hydraulikkreises über die Hy-draulikleitung 40 mit der Pumpleitung 50 und über die Hydraulikleitung 30, das ODER-Ventil OV in seiner Vorzugsstellung und das Proportionalventil P1 mit der Tankleitung 60 verbunden. Der Heckdeckel wird dadurch von seiner offenen in seine geschlossene Position bewegt. Kurz vor Erreichen der Endlage wird die Heckdeckelbewegung abgebremst, indem das Proportionalventil P1 teilweise bestromt und dadurch eine Drosselung des in die Tankleitung 60 fließenden Hydraulik-fluids erreicht wird. Sobald die Endlage vollständig erreicht ist, kann der Heckdeckel in der geschlossenen Position verriegelt und das Proportionalventil P1 inaktiv geschaltet werden.

Wichtig für das Funktionieren der Hydraulikanlage beim Schließen des Cabrioverdecks ist also, dass das ODER-Ventil OV beim Schließen des Heckdeckels eine tankseitige Verbindung über das Proportionalventil P1 schafft, um den Heckdeckel vor Erreichen der Endlage mittels des Proportionalventils P1 abbremsen zu können. Der Rückfluß des Hydraulikfluids aus den Aktuatoren sowohl der Dachbewegung als auch der Heckdeckelbewegung in den Tank T wird somit immer über das eine Proportionalventil P1 geregelt.

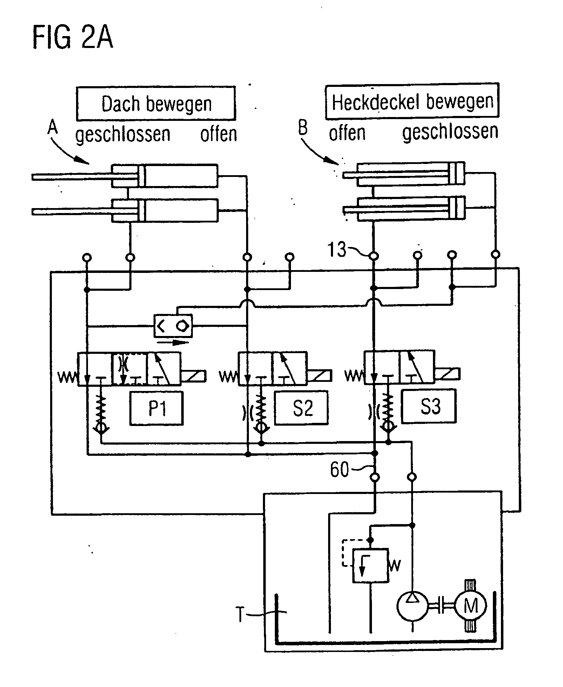

Figur 2A zeigt als zweites Ausführungsbeispiel eine abgewandelte Ausführungsform des ersten Ausführungsbeispiels. Der Unterschied besteht allein darin, dass die Aktuatoren B des zweiten Schaltkreises nicht regenerativ betrieben werden, sondern dass stattdessen ein weiteres Schaltventil S3 vorgesehen ist, über welches das durch den ersten Hydraulikanschluß 13 aus dem Aktuator B verdrängte Hydraulikfluid zur Tankleitung 60 und weiter zum Tank T zurückgeführt werden kann. Dies bietet den Vorteil, dass beim Öffnen des Heckdeckels größere Kräfte mittels des Aktuators B realisierbar sind, hat aber den Nachteil, dass das zusätzliche Schaltventil S3 einschließlich der zugehörigen Verkabelung und Ansteuerungselektronik erforderlich wird.

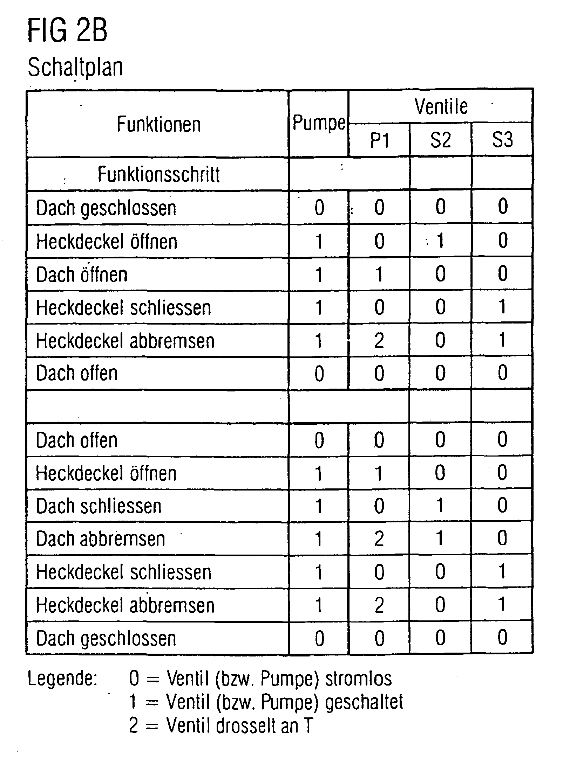

Figur 2B zeigt zu dem Hydraulikschema gemäß Figur 2A die chronologische Abfolge der Schaltstellungen der drei Ventile P1, S2 und S3. Im Unterschied zu dem Ablaufplan nach Figur 1B ergibt sich aus dem Ablaufplan nach Figur 2B, dass das zusätzliche Schaltventil S3 lediglich aktiv geschaltet wird, wenn der Heckdeckel von seinem geöffneten Zustand in seinen geschlossenen Zustand bewegt wird. Ansonsten ist es zum Tank T offen.

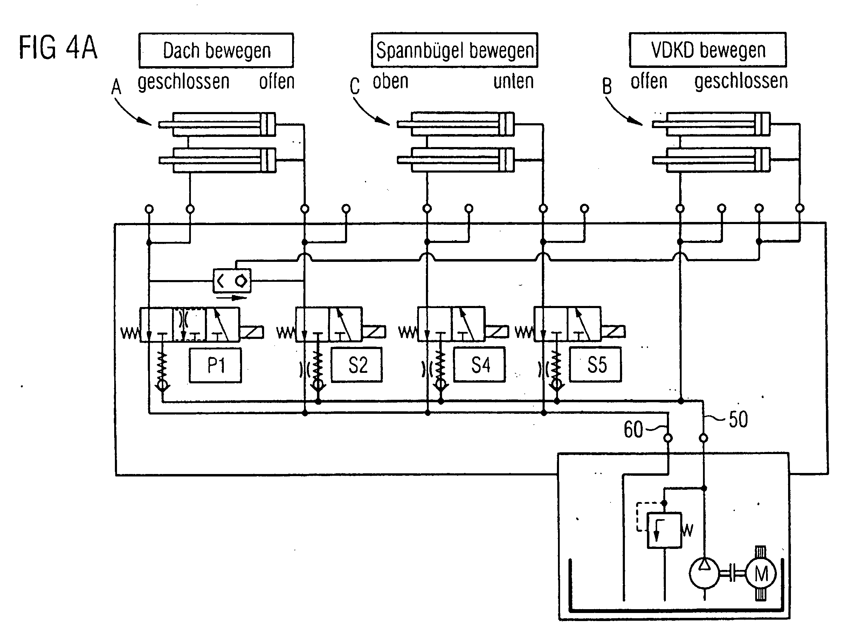

Figur 4A zeigt ein drittes Ausführungsbeispiel gemäß einer anderen abgewandelten Ausführungsform des ersten Ausführungsbeispiels. In diesem Falle ist zusätzlich zu den ersten und zweiten Hydraulikkreisen ein dritter Hydraulikkreis mit Aktuatoren C vorhanden. Der dritte Hydraulikkreis ist mit derselben Pumpleitung 50 und Tankleitung 60 verbunden, wie die ersten und zweiten Hydraulikkreise mit ihren Aktuatoren A bzw. B. Im Gegensatz zum zweiten Hydraulikschaltkreis mit den Aktuatoren B werden die Aktuatoren C des dritten Hydraulikschaltkreises nicht über die Ventile P1 und S2 des ersten Hydraulikschaltkreises gesteuert. Statt dessen sind zwei separate Schaltventile S4 und S5 vorgesehen, die vorzugsweise identisch ausgebildet sind wie das Schaltventil S2, also etwa als elektromagnetisch betätigtes 3/2-Ventil mit Federrückstellung, insbesondere als Kugelsitzventil und vorzugsweise mit tankseitiger Drosselung. Selbstverständlich kann auch der Aktuator C des dritten Hydraulikkreises regenerativ betrieben werden, wobei dann das Schaltventil S4 entfallen kann und die betreffende Hydraulikleitung mit der Pumpleitung 50 verbunden wird.

Der dritte Hydraulikkreis mit den Aktuatoren C kann beispielsweise dazu dienen, ein drittes Teil des Cabrioverdecks unabhängig von den übrigen Teilen des Cabrioverdecks zu bewegen. Insbesondere eignet sich eine derartige Hydraulikanlage für ein Cabrioverdeck aus Stoff, welches als zusätzliches bewegliches Teil einen Spannbügel zum Spannen des Stoffverdecks im geschlossenen Verdeckzustand besitzt. Dieser Spannbügel kann dann mittels der Aktuatoren C des dritten Hydraulikkreises bewegt werden.

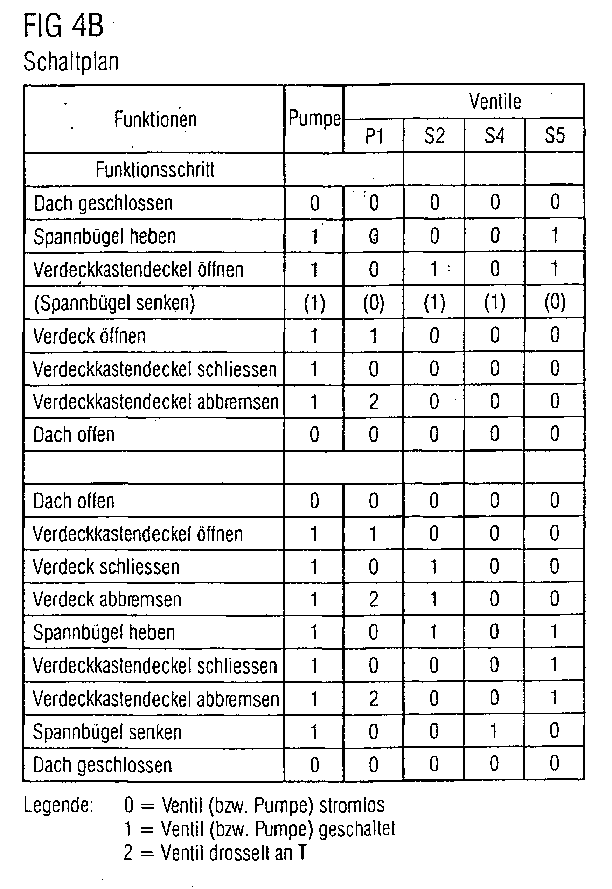

Figur 4B zeigt dazu einen geeigneten Ablaufplan. Dieser Ablaufplan unterscheidet sich von dem Ablaufplan aus Figur 1B lediglich durch die beiden Funktionsschritte "Spannbügel heben" und "Spannbügel senken" sowohl beim Öffnen des Dachs als auch beim Schließen des Dachs. Beim Öffnen des Dachs kann der Funktionsschritt "Spannbügel senken" entfallen oder sich auf ein kurzes Anstoßen der Spannbügelbewegung beschränken, da sich der Spannbügel schwerkraftbedingt und im Zusammenwirken mit dem Verdeck ohnehin selbsttätig absenkt. Dementsprechend wird das Schaltventil S5 beim Schließen des Dachs vor und während des Öffnens des Verdeckkastendeckels (VDKD) aktiviert, um den Spannbügel anzuheben und in der gehobenen Position zu halten. Anschließend wird das Schaltventil S5 inaktiv geschaltet und gegebenenfalls kurzzeitig das Schaltventil S4 aktiv geschaltet, um das Senken des Spannbügels einzuleiten. Im übrigen laufen die Funktionsschritte beim Öffnen des Dachs genauso ab, wie zuvor in bezug auf das erste Ausführungsbeispiel beschrieben.

Beim Schließen des Dachs wird der Spannbügel in entsprechender Weise durch Aktivieren des Schaltventils S5 angehoben und in seiner angehobenen Position gehalten, bevor und während der Verdeckkastendeckel geschlossen wird. Nachdem der Verdeckkastendeckel geschlossen und verriegelt ist, wird der Spannbügel abgesenkt, indem das Schaltventil S5 inaktiv und statt dessen das Schaltventil S4 aktiv geschaltet wird. Nach Verriegeln des Spannbügels können alle Ventile inaktiv und die Pumpe ausgeschaltet werden. Im übrigen verlaufen beim Schließen des Dachs alle Funktionsschritte in derselben Weise, wie in bezug auf das erste Ausführungsbeispiel ausgeführt.

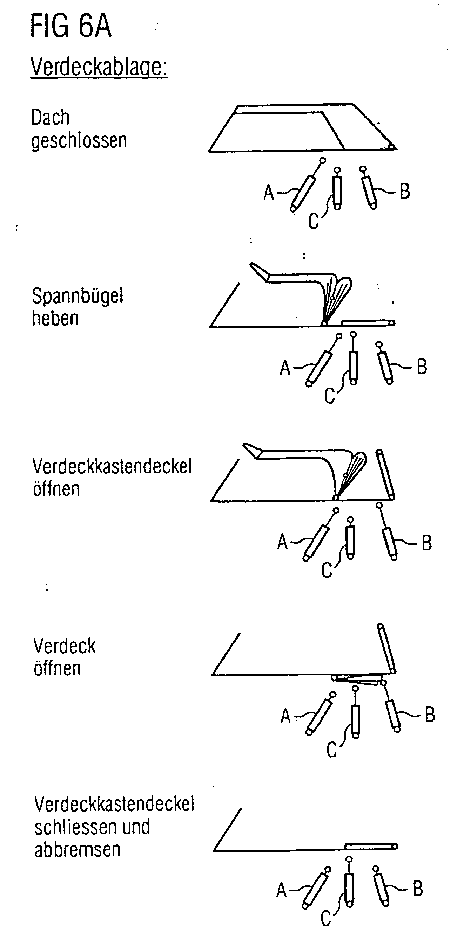

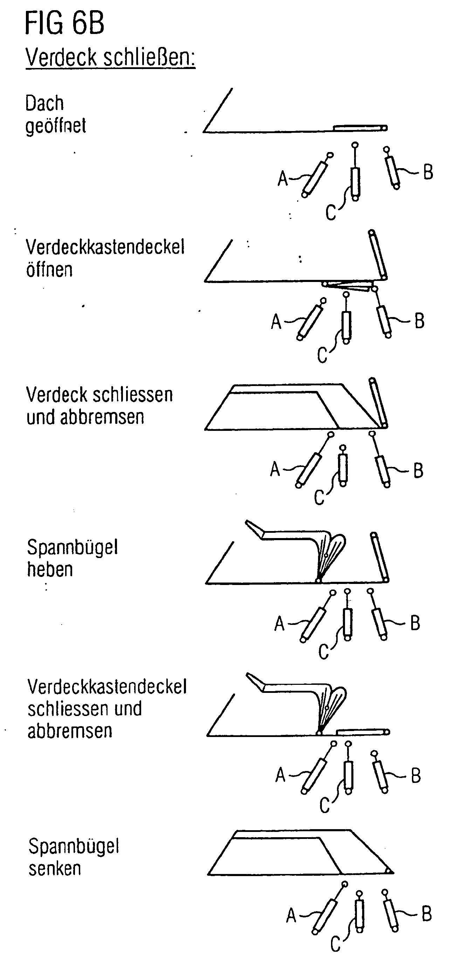

Der Verdeckablauf bei der Verdeckablage und beim Schließen des Verdecks ist in seinen einzelnen Schritten in den Figuren 6A bzw. 6B schematisch dargestellt.

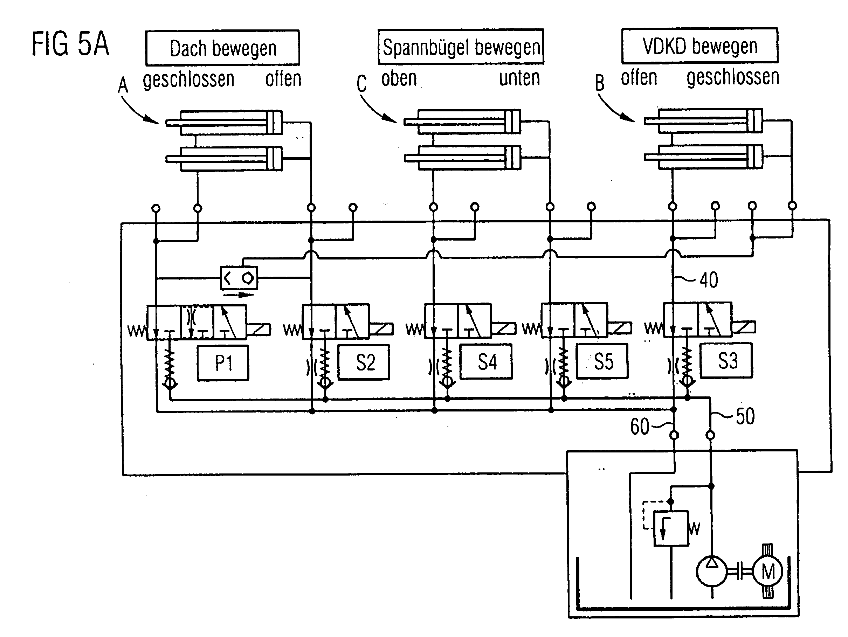

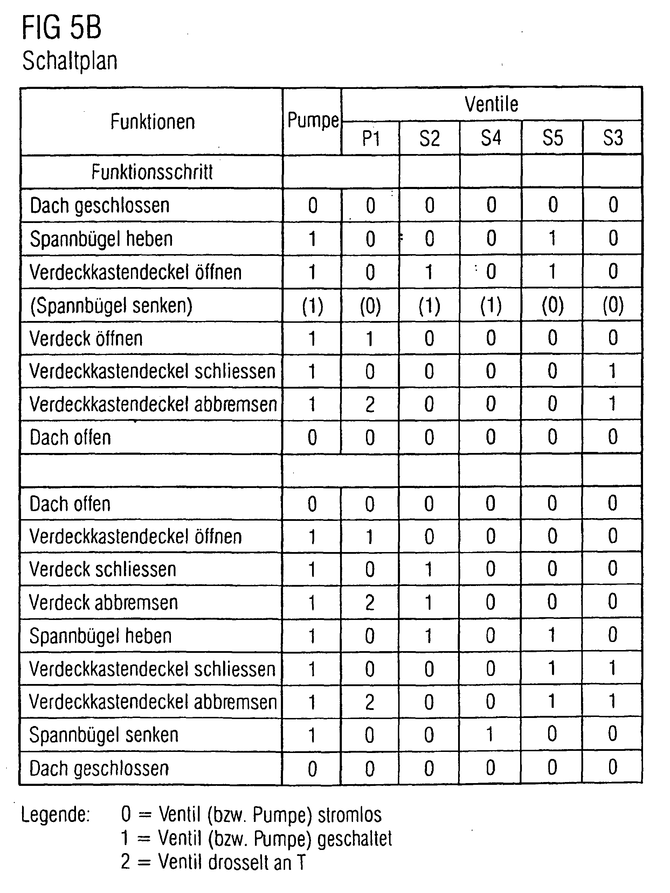

Figur 5A zeigt als viertes Ausführungsbeispiel eine weitere Abwandlung, welche im Grunde eine Kombination des zweiten und des dritten Ausführungsbeispiels bildet. Das heißt, auch im vierten Ausführungsbeispiel ist ein dritter Hydraulikkreis mit den bereits zum dritten Ausführungsbeispiel erläuterten Schaltventilen S4 und S5 vorgesehen. Darüber hinaus werden die Aktuatoren B des dritten Hydraulikkreises nicht regenerativ betrieben, wie im ersten und dritten Ausführungsbeispiel, sondern statt dessen ist ein zweites Schaltventil S3 im zweiten Hydraulikkreis vorhanden, wie im Zusammenhang mit dem zweiten Ausführungsbeispiel bereits erläutert. Eine detailliertere Beschreibung dieses vierten Ausführungsbeispiels ist daher entbehrlich. Insbesondere wird das Schaltventil S3 lediglich während des Schließvorgang des Verdeckkastendeckels (VDKD) aktiv geschaltet, wie auch dem erweiterten Ablaufplan gemäß Figur 5B zu entnehmen ist, der sich ansonsten nicht vom Ablaufplan gemäß Figur 4B unterscheidet.

## Patentansprüche

1. Hydraulikanlage zum Öffnen und Schließen eines Cabrioverdecks einschließlich des Öffnens und Schließens eines Dachs sowie eines Stauraumdeckels, unter dem das Dach im geöffneten Zustand verstaut wird, umfassend:
- einen ersten Hydraulikkreis zur Bewegung eines Dachs des Cabrioverdecks, mit mindestens einem Aktuator (A), der einen ersten Hydraulikanschluß (11) und einen zweiten Hydraulikanschluß (12) umfasst und vorgesehen ist, das Dach zu schließen, wenn Hydraulikfluid durch den ersten Hydraulikanschluß (11) aus dem Aktuator (A) strömt,
- einen zweiten Hydraulikkreis zur Bewegung des Stauraumdeckels, mit mindestens einem Aktuator (B), der einen ersten Hydraulikanschluß (13) und einen zweiten Hydraulikanschluß (14) umfasst und vorgesehen ist, den Stauraumdeckel zu schließen, wenn Hydraulikfluid durch den zweiten Hydraulikanschluß (14) aus dem Aktuator (B) strömt,
- ein erstes Ventil (P1), welches über eine erste Hydraulikleitung (10) mit dem ersten Hydraulikanschluß (11) des ersten Hydraulikkreises verbunden ist und eingerichtet ist, diesen je nach seiner Schaltstellung mit einer Hydraulikfluidzuleitung (50) oder einer Hydraulikfluidableitung (60) zu verbinden,
- ein zweites Ventil (S2), welches über eine zweite Hydraulikleitung (20) mit dem zweiten Hydraulikanschluß (12) des ersten Hydraulikkreises verbunden ist und eingerichtet ist, diesen je nach seiner Schaltstellung mit einer Hydraulikfluidzuleitung (50) oder einer Hydraulikfluidableitung (60) zu verbinden, und
- ein ODER-Ventil (OV), welches angeordnet und eingerichtet ist, je nach seiner Schaltstellung eine dritte Hydraulikleitung (30), die zu einem Hydraulikanschluß des Aktuators (B) des zweiten Hydraulikkreises führt, entweder mit der ersten Hydraulikleitung (10) oder mit der zweiten Hydraulikleitung (20) zu verbinden,
**dadurch gekennzeichnet, dass** das erste Ventil (P1) ein Proportionalventil ist und dass die dritte Hydraulikleitung (30) zum zweiten Hydraulik-anschluß (14) des Aktuators (B) des zweiten Hydraulikkreises führt.

2. Hydraulikanlage nach Anspruch 1, **dadurch gekennzeichnet, dass** das ODER-Ventil (OV) eine Vorzugsstellung derart besitzt, dass es in seiner Vorzugsstellung eine Verbindung der dritten Hydraulikleitung (30) mit der ersten Hydraulikleitung (10) herstellt.

3. Hydraulikanlage nach Anspruch 2, **dadurch gekennzeichnet, dass** das ODER-Ventil (OV) ein passives Bauelement ist.

4. Hydraulikanlage nach Anspruch 2 oder 3, **dadurch gekennzeichnet, dass** das ODER-Ventil (OV) durch Federvorspannung in seiner Vorzugsstellung gehalten wird.

5. Hydraulikanlage nach einem der Ansprüche 1 bis 4, **dadurch gekennzeichnet, dass** das zweite Ventil (S2) ein Ventil ist, welches nur Schaltendstellungen einnehmen kann.

6. Hydraulikanlage nach einem der Ansprüche 1 bis 5, **dadurch gekennzeichnet, dass** eine vierte Hydraulikleitung (40) vom ersten Hydraulikanschluß (13) des zweiten Hydraulikkreises zu der Hydraulikfluidzuleitung (50) führt, wobei zwischen dem ersten Hydraulikanschluß (13) und dem zweiten Hydraulikanschluß (14) des Aktuators (B) des zweiten Hydraulikkreises ein Differentialkolben verlagerbar angeordnet ist, dessen kleinere Kolbenfläche auf der Seite des ersten Hydraulikanschlusses (13) liegt, derart dass der Aktuator (B) des zweiten Hydraulikkreises regenerativ betreibbar ist.

7. Hydraulikanlage nach einem der Ansprüche 1 bis 5, **dadurch gekennzeichnet, dass** eine vierte Hydraulikleitung (40) vom ersten Hydraulikanschluß (13) des zweiten Hydraulikkreises zu einem dritten Ventil (S3) führt, mittels dessen zwischen einer Verbindung der vierten Hydraulikleitung (40) zu einer Hydraulikfluidzuleitung (50) und zu einer Hydraulikfluidableitung (60) umgeschaltet werden kann.

8. Hydraulikanlage nach einem der Ansprüche 1 bis 7, **dadurch gekennzeichnet, dass** ein dritter Hydraulikkreis vorhanden ist mit mindestens einem weiteren Aktuator (C), der einen ersten Hydraulikanschluß und einen zweiten Hydraulikanschluß umfasst, um den weiteren Aktuator (C) in entgegengesetzte Richtungen zu bewegen, und mit einem Schaltventil (S4, S5) vor zumindest einem der Hydraulikanschlüsse des weiteren Aktuators (C), mittels dessen zwischen einer Verbindung des betreffenden Hydraulikanschlusses zu einer Hydraulikfluidzuleitung (50) und zu einer Hydraulikfluidableitung (60) umgeschaltet werden kann.

9. Hydraulikanlage nach einem der Ansprüche 1 bis 8, **dadurch gekennzeichnet, dass** die genannten Hydraulikkreise an eine gemeinsame Hydraulikfluidzuleitung (50) angeschlossen sind.

10. Hydraulikanlage nach einem der Ansprüche 1 bis 9, **dadurch gekennzeichnet, dass** das Proportionalventil (P1) bezüglich einer Strömungsverbindung zwischen der ersten Hydraulikleitung (10) und der Hydraulikfluidableitung (60) Proportionalcharakteristik aufweist, während es eine Verbindung der ersten Hydraulikleitung (10) mit der Hydraulikfluidzuleitung (50) vollständig geschlossen hält.

## Claims

1. A hydraulic system for opening and closing a convertible top including the opening and closing of a roof and of a storage compartment lid underneath which the roof is stored in the opened state, comprising:
- a first hydraulic circuit for moving a roof of the convertible top, having at least one actuator (A) which comprises a first hydraulic connection (11) and a second hydraulic connection (12) and is provided for closing the roof when the hydraulic fluid flows through the first hydraulic connection (11) from the actuator (A),
- a second hydraulic circuit for moving the storage compartment lid, having at least one actuator (B) which comprises a first hydraulic connection (13) and a second hydraulic connection (14) and is provided for closing the storage compartment lid when hydraulic fluid flows through the second hydraulic connection (14) from the actuator (B),
- a first valve (P1) which is connected via a first hydraulic line (10) with the first hydraulic connection (11) of the first hydraulic circuit and is adapted to connect, in dependence on its switching position, said hydraulic circuit with a hydraulic fluid feed line (50) or a hydraulic fluid drainage line (60),
- a second valve (S2) which is connected via a second hydraulic line (20) with the second hydraulic connection (12) of the first hydraulic circuit and is adapted to connect, in dependence on its switching position, said hydraulic circuit with a hydraulic fluid feed line (50) or a hydraulic fluid drainage line (60), and
- an OR-valve (OV) that is arranged and adapted to connect, in dependence on its switching position, a third hydraulic line (30) leading to a hydraulic connection of the actuator (B) of the second hydraulic circuit either with the first hydraulic line (10) or with the second hydraulic line (20),
**characterized in that** the first valve (P1) is a proportional valve and that the third hydraulic line (30) leads to the second hydraulic connection (14) of the actuator (B) of the second hydraulic circuit.

2. The hydraulic system according to claim 1, **characterized in that** the OR-valve (OV) has a preferred position of such a type that in its preferred position it produces a connection of the third hydraulic line (30) with the first hydraulic line (10).

3. The hydraulic system according to claim 2, **characterized in that** the OR-valve (OV) is a passive construction element.

4. The hydraulic system according to claim 2 or 3, **characterized in that** the OR-valve (OV) is held it is preferred position by spring pretensioning.

5. The hydraulic system according to any of the claims 1 to 4, **characterized in that** the second valve (S2) is a valve that can only assume switching end positions.

6. The hydraulic system according to any of the claims 1 to 5, **characterized in that** the fourth hydraulic line (40) leads from the first hydraulic connection (13) of the second hydraulic circuit to the hydraulic fluid feed line (50), wherein between the first hydraulic connection (13) and the second hydraulic connection (14) of the actuator (B) of the second hydraulic circuit there is displaceably arranged a differential piston, whose smaller piston surface lies on the side of the first hydraulic connection (13) such that the actuator (B) of the second hydraulic circuit can be operated regeneratively.

7. The hydraulic system according to any of the claims 1 to 5, **characterized in that** a fourth hydraulic line (40) leads from the first hydraulic connection (13) of the second hydraulic circuit to a third valve (S3), by means of which a connection of the fourth hydraulic line (40) can be switched to a hydraulic fluid feed line (50) and to a hydraulic fluid drainage line (60).

8. The hydraulic system according to any of the claims 1 to 7, **characterized in that** a third hydraulic circuit is present, having at least one further actuator (C), comprising a first hydraulic connection and a second hydraulic connection so as to move the further actuator (C) in opposite directions, and having a switching valve (S4, S5) in front of at least one of the hydraulic connections of the further actuator (C), by means of which switching valve it is possible to switch between a connection of the hydraulic connection in question with a hydraulic fluid feed line (50) and with a hydraulic fluid drainage line (60).

9. The hydraulic system according to any of the claims 1 to 8, **characterized in that** the mentioned hydraulic circuits are connected with a common hydraulic fluid feed line (50).

10. The hydraulic system according to any of the claims 1 to 9, **characterized in that** the proportional valve (P1) has a proportional characteristic with reference to a flow connection between the first hydraulic conduct (10) and the hydraulic fluid drainage line (60), whereas it keeps a connection of the first hydraulic conduct (10) with the hydraulic fluid feed line (50) completely locked.

## Revendications

1. Installation hydraulique destinée à l'ouverture et à la fermeture d'une capote de cabriolet y compris l'ouverture et la fermeture d'un toit ainsi que d'un couvercle d'espace de rangement sous lequel le toit est logé à l'état ouvert, comprenant :
- un premier circuit hydraulique pour le déplacement d'un toit de la capote de cabriolet, comprenant au moins un actuateur (A) qui comporte un premier raccord hydraulique (11) et un deuxième raccord hydraulique (12) et est prévu pour fermer le toit quand du fluide hydraulique s'écoule hors de l'actuateur (A) à travers le premier raccord hydraulique (11),
- un deuxième circuit hydraulique pour le déplacement du couvercle d'espace de rangement, comprenant au moins un actuateur (B) qui comporte un premier raccord hydraulique (13) et un deuxième raccord hydraulique (14) et est prévu pour fermer le couvercle d'espace de rangement quand du fluide hydraulique s'écoule hors de l'actuateur (B) à travers le deuxième raccord hydraulique (14),
- une première soupape (P1) qui, par l'intermédiaire d'une première conduite hydraulique (10), est reliée au premier raccord hydraulique (11) du premier circuit hydraulique et est équipée pour relier ce dernier, en fonction de sa position de commutation, avec une conduite d'amenée (50) de fluide hydraulique ou avec une conduite d'évacuation (60) de fluide hydraulique,
- une deuxième soupape (S2) qui, par l'intermédiaire d'une deuxième conduite hydraulique (20), est reliée au deuxième raccord hydraulique (12) du premier circuit hydraulique et est équipée pour relier ce dernier, en fonction de sa position de commutation, avec une conduite d'amenée (50) de fluide hydraulique ou avec une conduite d'évacuation (60) de fluide hydraulique, et
- une soupape-OU (OV) qui est agencée et équipée, en fonction de sa position de commutation, pour relier une troisième conduite hydraulique (30) menant à un raccord hydraulique de l'actuateur (B) du deuxième circuit hydraulique soit avec la première conduite hydraulique (10), soit avec la deuxième conduite hydraulique (20),
**caractérisée en ce que** la première soupape (P1) est une soupape proportionnelle et **en ce que** la troisième conduite hydraulique (30) mène au deuxième raccord hydraulique (14) de l'actuateur (B) du deuxième circuit hydraulique.

2. Installation hydraulique selon la revendication 1, **caractérisée en ce que** la soupape-OU (OV) possède une position privilégiée de telle sorte qu'elle établit dans sa position privilégiée un raccordement de la troisième conduite hydraulique (30) avec la première conduite hydraulique (10).

3. Installation hydraulique selon la revendication 2, **caractérisée en ce que** la soupape-OU (OV) est un composant passif.

4. Installation hydraulique selon la revendication 2 ou 3, **caractérisée en ce que** la soupape-OU (OV) est maintenue par précontrainte du ressort dans sa position privilégiée.

5. Installation hydraulique selon une des revendications de 1 à 4, **caractérisée en ce que** la deuxième soupape (S2) est une soupape qui ne peut adopter que des positions finales de commutation.

6. Installation hydraulique selon une des revendications de 1 à 5, **caractérisée en ce qu'**une quatrième conduite hydraulique (40) mène du premier raccord hydraulique (13) du deuxième circuit hydraulique à la conduite d'amenée (50) de fluide hydraulique, il étant agencé de manière déplaçable entre le premier raccord hydraulique (13) et le deuxième raccord hydraulique (14) de l'actuateur (B) du deuxième circuit hydraulique un piston différentiel dont la surface inférieure de piston se trouve du côté du premier raccord hydraulique (13), de telle sorte que l'actuateur (B) du deuxième circuit hydraulique est exploitable de manière régénératrice.

7. Installation hydraulique selon une des revendications de 1 à 5, **caractérisée en ce qu'**une quatrième conduite hydraulique (40) mène du premier raccord hydraulique (13) du deuxième circuit hydraulique à une troisième soupape (S3) au moyen de laquelle il est possible de commuter entre un raccordement de la quatrième conduite hydraulique (40) avec une conduite d'amenée (50) de fluide hydraulique et avec une conduite d'évacuation (60) de fluide hydraulique.

8. Installation hydraulique selon une des revendications de 1 à 7, **caractérisée en ce qu'**il y a un troisième circuit hydraulique comprenant au moins un actuateur (C) supplémentaire qui comporte un premier raccord hydraulique et un deuxième raccord hydraulique afin de déplacer l'actuateur (C) supplémentaire en direction opposée, et comprenant une soupape de commutation (S4, S5) située avant au moins un des raccords hydrauliques de l'actuateur (C) supplémentaire et au moyen de laquelle il est possible de commuter entre un raccordement du raccord hydraulique concerné avec une conduite d'amenée (50) de fluide hydraulique et avec une conduite d'évacuation (60) de fluide hydraulique.

9. Installation hydraulique selon une des revendications de 1 à 8, **caractérisée en ce que** les circuits hydrauliques précités sont raccordés à une conduite commune d'amenée (50) de fluide hydraulique.

10. Installation hydraulique selon une des revendications de 1 à 9, **caractérisée en ce que** la soupape proportionnelle (P1) présente, en ce qui concerne un raccordement d'écoulement entre la première conduite hydraulique (10) et la conduite d'évacuation (60) de fluide hydraulique, une caractéristique de proportionnalité, tandis qu'elle maintient complètement fermée un raccordement de la première conduite hydraulique (10) avec la conduite d'amenée (50) de fluide hydraulique.
